# EUROPÄISCHE PATENTANMELDUNG

(11) **EP 2 172 727 A2**
(43) Veröffentlichungstag der Anmeldung: **07.04.2010**
(21) Anmeldenummer: 09011842.3
(22) Anmeldetag: 17.09.2009
(51) Int. Cl.: F28C 3/14, F27D 17/00

(54) **Rauchgaswärmeüberträger**

(30) Priorität: 01.10.2008 DE 202008013605 U
(71) Anmelder: M+W Zander FE GmbH, 70499 Stuttgart (DE)
(72) Erfinder: Lüdtke, Thomas, 71735 Eberdingen (DE); Renz, Manfred, 71254 Ditzingen (DE)
(74) Vertreter: Jackisch-Kohl, Anna-Katharina

(57) **Zusammenfassung**

Der Rauchgaswärmeübertrager hat einen Behälter (1), in dem sich ein von einem Rauchgas (13) durchströmter Wärmeübertrager in Form von Schüttgut (11, 14) befindet. Der Wärmeübertrager weist einen Einlass (16) und einen Auslass (5) für das Rauchgas (13) auf. Um den Rauchgaswärmeübertrager so auszubilden, dass bei einfacher und kostengünstiger Gestaltung eine lange Standzeit erreicht wird, ist das Rauchgas (13) zumindest annähernd vertikal dem Schüttgut (11, 14) zuführbar. Über den Rauchgaswärmeübertrager wird das Rauchgas (13) überwiegend in vertikaler Richtung zugeführt. Dadurch kann der Behälter (1) im Bereich der Rauchgaszuführung einfach ausgebildet sein.

## Beschreibung

Die Erfindung betrifft einen Rauchgaswärmeübertrager nach dem Oberbegriff des Anspruches 1.

Der Rauchgaswärmeübertrager wird bei der allothermen Vergasung organischer Substanzen, wie zum Beispiel Biomasse, eingesetzt. Ein auf hohe Temperaturen, beispielsweise von mehr als 1.000°C erhitztes Rauchgas wird in einen Behälter eingeführt und über den Wärmeübertrager geführt, der als Schüttgut in Form von Kugeln in den Behälter eingebracht ist. Die Kugeln wandern aufgrund der Schwerkraft im Behälter langsam von oben nach unten. Der Durchsatz der Kugeln wird durch zyklisches Öffnen einer unterhalb des Behälters angeordneten Schleuse bestimmt. In gleicher Weise, wie die Kugeln dem Behälter entnommen werden, erfolgt an der Oberseite des Behälters die Zugabe von neuen Kugeln. Um eine optimale Wärmeübertragung vom Rauchgas an das Schüttgut zu gewährleisten, ist über den gesamten Behälterquerschnitt eine möglichst gleichförmige Durchströmung der Kugeln durch das Rauchgas im Gegenstrom erforderlich. Deren Behälter hat einen trichterförmigen Auslaufteil, um das erhitzte Schüttgut der Schleuse zuzuführen. Als Schüttgut eignen sich kugelförmige Materialien mit hoher spezifischer Wärmekapazität und hoher Abriebfestigkeit wie z.B. Korund. Da das Schüttgut eine Relativbewegung zur Behälterwandung erfährt, sind insbesondere die Innenoberflächen im Auslaufteil des Behälters einem erhöhten Verschleiß ausgesetzt. Zur effektiven Wärmeübertragung muss das heiße Rauchgas das Schüttgut im Gegenstrom durchströmen, also im unteren Behälterbereich in das Schüttgut eingeführt werden. Der Ausgestaltung dieses Zuströmbereiches kommt daher besondere Bedeutung zu, da hier Bereiche mit höchsten thermischen und mechanischen Materialbeanspruchungen zusammenfallen.

Der Erfindung liegt die Aufgabe zugrunde, den gattungsgemäßen Rauchgaswärmeübertrager so auszubilden, dass bei einfacher und kostengünstiger Gestaltung eine lange Standzeit erreicht wird.

Diese Aufgabe wird beim gattungsgemäßen Rauchgaswärmeübertrager erfindungsgemäß mit den kennzeichnenden Merkmalen des Anspruches 1 gelöst.

Beim erfindungsgemäßen Rauchgaswärmeübertrager wird das Rauchgas dem Wärmeübertrager nicht in radialer, sondern überwiegend in vertikaler Richtung zugeführt. Dadurch erübrigt sich eine aufwändige Gestaltung des Behälters im Bereich der Rauchgaszuführung. Insbesondere sind keine speziell geformten Steine für die Ausmauerung des Behälters erforderlich.

Das Rauchgas kann dem Schüttgut von oben oder von unten zugeführt werden, je nach Grundkonstruktion des Behälters.

Die für das Rauchgas vorgesehene Zuführung kann bevorzugt nahe der Behälterinnenwand vorgesehen sein. Die Zuführung ist vorteilhaft Teil eines im Behälter befindlichen ringförmigen Aufnahmeraumes für das Schüttgut.

Da die Zuführung nahe der Behälterinnenwand vorgesehen ist, kann der Rauchgas-Einlass in diesen ringförmigen Aufnahmeraum radial oder tangential erfolgen. Das Rauchgas gelangt somit auf kürzestem Wege in den ringförmigen Aufnahmeraum.

Vorteilhaft erweitert sich dieser Aufnahmeraum über einen Teil seiner Höhe in Strömungsrichtung des Rauchgases im Querschnitt. Dadurch wird erreicht, dass sich das Rauchgas gleichmäßig über den Querschnitt des Aufnahmeraumes verteilen kann, so dass es innigen Kontakt mit dem Schüttgut im Aufnahmeraum hat.

Der ringförmige Aufnahmeraum ist vorteilhaft über wenigstens einen Durchlass mit einem zentralen Innenraum des Behälters strömungsverbunden. Dadurch kann das Rauchgas nach Durchströmen des Schüttgutes im ringförmigen Aufnahmeraum durch den Durchlass in den zentralen Behälterinnenraum gelangen.

Bei einer einfachen konstruktiven Ausgestaltung wird der Durchlass für das Rauchgas zwischen Stützen gebildet, die auf dem Boden des Behälters abgestützt sind. Die Stützen können als tragende Bauelemente eingesetzt werden, um vorteilhaft einen Trichterteil abzustützen, der den ringförmigen Aufnahmeraum über einen Teil seiner Höhe radial nach innen begrenzt.

Der ringförmige Aufnahmeraum wird vorteilhaft radial nach außen durch die Wandung des Behälters begrenzt. Somit wird durch Einbau des Trichterteiles im Behälter der ringförmige Aufnahmeraum in konstruktiv einfacher Weise gebildet.

Der Innenraum des Behälters ist vorteilhaft mit dem Schüttgut teilweise gefüllt. Dadurch kann das Rauchgas nach dem Durchströmen des Durchlasses zwischen den Stützen in diesen Behälterinnenraum eintreten und das dort befindliche Schüttgut von unten nach oben durchströmen. Auf diese Weise gibt das Rauchgas seine Wärme nicht nur an das Schüttgut im ringförmigen Aufnahmeraum, sondern auch an das Schüttgut im Behälterinnenraum ab, wodurch sich eine optimale Wärmeübertragung ergibt.

Zu diesem Zweck ist der Durchlass vorteilhaft am unteren Endbereich des Behälterinnenraumes vorgesehen.

Der Rauchgas-Einlass kann vorteilhaft mit wenigstens einem Rohr strömungsverbunden sein, das sich durch den Innenraum des Behälters erstreckt. Das Rauchgas durchströmt das Rohr in vertikaler Richtung. Das Rohr kann teilweise mit Schüttgut gefüllt sein, z.B. entsprechend des vom Behälterraum in den Rohrinnenraum sich ausbildenden Schüttkegels.

Das Rohr verläuft vorteilhaft zentral und axial im Behälterinnenraum.

Bei einer einfachen konstruktiven Gestaltung wird das Rohr auf den Stützen abgestützt.

Der Rauchgas-Einlass wird vorteilhaft an das obere Ende eines solchen Rohres angeschlossen. Das Rauchgas durchströmt in diesem Falle das Rohr von oben nach unten.

Der Innenraum des Rohres ist bevorzugt mit dem das Rohr umgebenden Innenraum des Behälters strömungsverbunden. Das Rohr dient der Zuführung des Rauchgases zum im unteren Behälterbereich angeordneten.Überströmbereich in den Behälter, in dem sich das die Wärme aufnehmende Schüttgut im Wesentlichen befindet. Entsprechend des vom Behälterraum zum Rohrinnenraum gerichteten Schüttkegels wird sich auch eine geringe Menge an Schüttgut im Rohrinnenraum ablagern, was sich aber nicht nachteilig auf die Strömungsverhältnisse und den Wärmeübergang auswirkt.

Der Rauchgas-Einlass kann auch in den Behälterboden münden. Dann strömt es von unten in den Behälter ein und durchströmt das darin befindliche Schüttgut vertikal nach oben.

Vorteilhaft ist oberhalb der Einlassmündung im Behälterboden eine Abdeckung im Behälter angeordnet. Sie sorgt dafür, dass das im Behälter befindliche Schüttgut quer zur Einlassmündung abgelenkt wird und nicht durch die Einlassmündung in den Rauchgas-Einlass gelangt.

Vorteilhaft ist zumindest die der Einlassmündung zugewandte Seite der Abdeckung im Querschnitt größer als die Einlassmündung. Dadurch wird das in dem Behälter über die Einlassmündung einströmende Rauchgas durch diese Abdeckungsseite seitlich abgelenkt, wodurch eine gute Verteilung des Rauchgases über den Querschnitt der Einlassmündung erreicht wird, bevor das Rauchgas in das Schüttgut gelangt.

Die Abdeckung ist vorteilhaft auf den Stützen gelagert, die sich auf dem Boden des Behälters abstützen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Axialschnitt eine erste Ausführungsform eines Behälters eines erfindungsgemäßen Rauchgaswärmeübertragers,
- Fig. 2: einen Schnitt längs der Linie I-I in Fig. 1,
- Fig. 3 bis Fig. 10: jeweils in Darstellungen entsprechend den Fig. 1 und 2 weitere Ausführungsformen von Behältern von erfindungsgemäßen Rauch- gaswärmeübertragern.

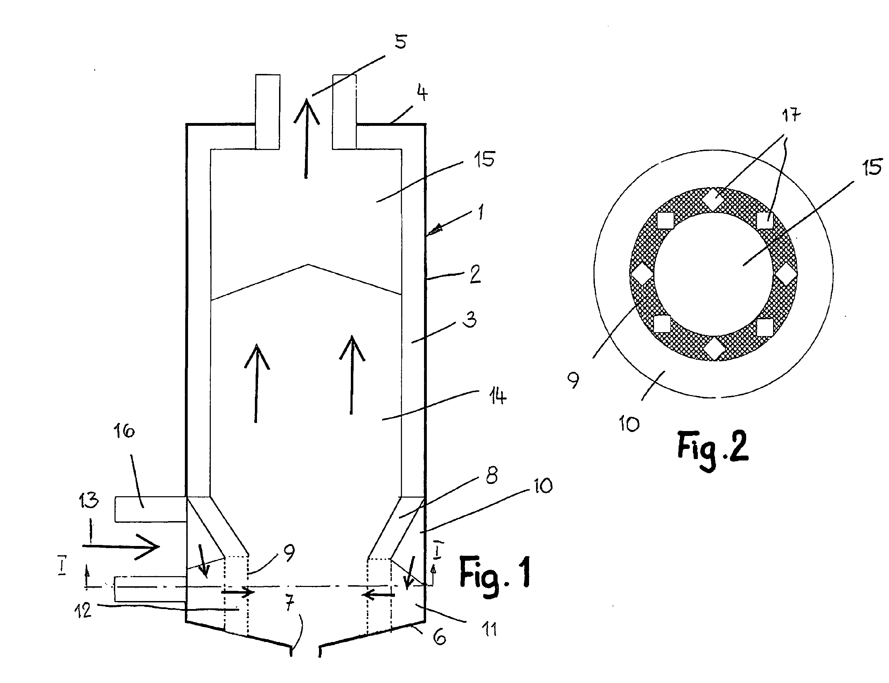

Der Rauchgaswärmeübertrager gemäß den Fig. 1 und 2 hat einen Behälter 1, der vorteilhaft kreisförmigen Querschnitt hat. Der Behälter 1 hat eine metallische Wandung 2, die innenseitig mit hitzebeständigem, vorzugsweise keramischem Material 3 ausgemauert ist. Es schützt durch seine wärmedämmende Wirkung die metallische Wandung 2 vor hohen Temperaturen. Die Innenseite der Isolierung 3 ist ausreichend abriebfest. Die Isolierung 3 kann beispielsweise auch aus Beton bestehen. Der Behälter 1 ist am oberen Ende mit einer Decke 4 versehen, die einen zentralen Auslass 5 für Rauchgas aufweist. Die Decke 4 ist im Ausführungsbeispiel eben ausgebildet, kann aber auch selbstverständlich jede andere Querschnittsform haben.

Am unteren Ende ist der Behälter 1 mit einem Boden 6 versehen, der sich leicht konisch nach unten verjüngt und zentral einen Auslass 7 hat. Er kann mit einem (nicht dargestellten) Sperrelement, wie einem Ventil, einem Schieber oder dergleichen, geöffnet und geschlossen werden.

Die Isolierung 3 hat über den größten Teil ihrer Länge vorteilhaft Zylinderform. Sie geht im unteren Bereich in einen nach unten sich verjüngenden Trichterteil 8 über, der seinerseits an einen vorteilhaft zylindrischen Endabschnitt 9 anschließt. Er erstreckt sich bis zum Boden 6 und umgibt den Auslass 7 mit Abstand. Aufgrund des Trichterteiles 8 und des Endabschnittes 9 wird ein äußerer ringförmiger Aufnahmeraum 10 gebildet, der radial außen von der Wandung 2, 3 und nach unten durch einen Teil des Bodens 6 begrenzt wird. In dem ringförmigen Aufnahmeraum 10 befindet sich wärmeaufnehmendes Schüttgut 11, vorzugsweise in Kugelform, mit einem Schüttwinkel entsprechend den spezifischen Eigenschaften dieses kugelförmigen Schüttgutes. Der Endabschnitt 9 ist mit Durchtrittsöffnungen 12 für das Rauchgas 13 versehen. Es strömt in noch zu beschreibender Weise durch das ruhende Schüttgut 11 und die Durchtrittsöffnungen 12 in das Schüttgut 14, das sich im Behälter 1 in dem von der Isolierung 3, dem Trichterteil 8 und dem Endabschnitt 9 umschlossenen Behälterinnenraum 15 befindet und vorteilhaft aus dem gleichen Material wie das Schüttgut 11 besteht. Das Schüttgut 14 bildet am oberen Ende ebenfalls einen Schüttwinkel entsprechend den spezifischen Eigenschaften des Schüttgutes. Vorteilhaft ist nicht der gesamte Innenraum 15 des Behälters 1 mit dem Schüttgut 14 gefüllt. Es hat einen Abstand von der Decke 4, die innenseitig ebenfalls mit der Beschichtung 3 als Isoliermaterial bedeckt ist.

In Höhe des Aufnahmeraumes 10 schließt an die Behälterwandung 2 ein Einlass 16 an, über den das Rauchgas 13 in den Aufnahmeraum 10 geleitet wird. Der Einlass 16 ist innenseitig ebenfalls mit einer Isolierung versehen, die aufgrund ihrer wärmedämmenden Wirkung die Außenseite des Einlasses 16 vor hohen Temperaturen schützt.

Das Rauchgas 13, das mit Temperaturen von 1.000°C und mehr über den Einlass 16 zugeführt wird, strömt in den ringförmigen Aufnahmeraum 10. Aufgrund des Trichterteiles 8 wird das Rauchgas 13 im Aufnahmeraum 10 im Wesentlichen axial nach unten in Richtung auf den Boden 6 gelenkt und durchströmt das Schüttgut 11 im Aufnahmeraum 10. Durch die Durchtrittsöffnungen 12 strömt das Rauchgas 13 im Wesentlichen horizontal und radial nach innen in den Innenraum 15. Hier strömt das Rauchgas, wie die eingezeichneten Pfeile zeigen, innerhalb des Behälterinnenraumes 15 durch das Schüttgut 14 nach oben und verlässt den Behälter 1 durch den Auslass 5. Aufgrund des Strömungswiderstandes im Schüttgut 14 verteilt sich das Rauchgas 13 innerhalb des Behälterinnenraumes 15 über den gesamten Querschnitt. Beim Durchtritt des Rauchgases 13 durch das Schüttgut 14 erfolgt die Wärmeübertragung vom Rauchgas 13 auf das Schüttgut. Es wandert aufgrund der Schwerkraft im Behälter 1 von oben nach unten. Der Durchsatz des Schüttgutes 14 wird durch zyklisches Öffnen des Auslasses 7 bestimmt. Die Zugabe des Schüttgutes 14 erfolgt vorteilhaft über einen deckenseitigen Einlass.

Aufgrund der beschriebenen Rauchgasführung durchströmt das Rauchgas das Schüttgut 11, 14 überwiegend in vertikaler Richtung. Die Innenwände des Behälters 1, die mit dem Schüttgut 11, 14 in Berührung kommen, sind glatt ausgebildet. Die Querschnittsform der Durchtrittsöffnungen 12 im zylindrischen Endabschnitt 9 kann weitgehend beliebig gestaltet sein.

Der Trichterteil 8 kann auf Säulen 17 gelagert sein, die sich auf dem Boden 6 abstützen und den Endabschnitt 9 bilden. Die Säulen 17 sind so ausgebildet und angeordnet, dass sie den statischen Anforderungen genügen. Die Säulen 17 sind über den Umfang des Endabschnittes 9 vorzugsweise gleichmäßig verteilt angeordnet. Der Bereich zwischen benachbarten Säulen 17 bildet die Durchtrittsöffnung.

Der Einlass 16 ist so gestaltet, dass das im Aufnahmeraum 10 befindliche Schüttgut 11 nicht durch den Einlass 16 nach außen gelangt. Das über den Einlass 16 zugeführte Rauchgas 13 gelangt von oben auf das Schüttgut 11 und durchströmt es nach unten. Über die Durchtrittsöffnungen 12 strömt das Rauchgas in den zylindrischen Endabschnitt 9 radial und durchströmt anschließend das gesamte Schüttgut 14 im Behälterinnenraum 15 nach oben. Das Rauchgas 13 durchströmt das Schüttgut 14, das von Zeit zu Zeit durch Öffnen des Auslasses 7 entnommen wird, im Gegenstrom, wodurch eine gute Wärmeübertragung sichergestellt ist.

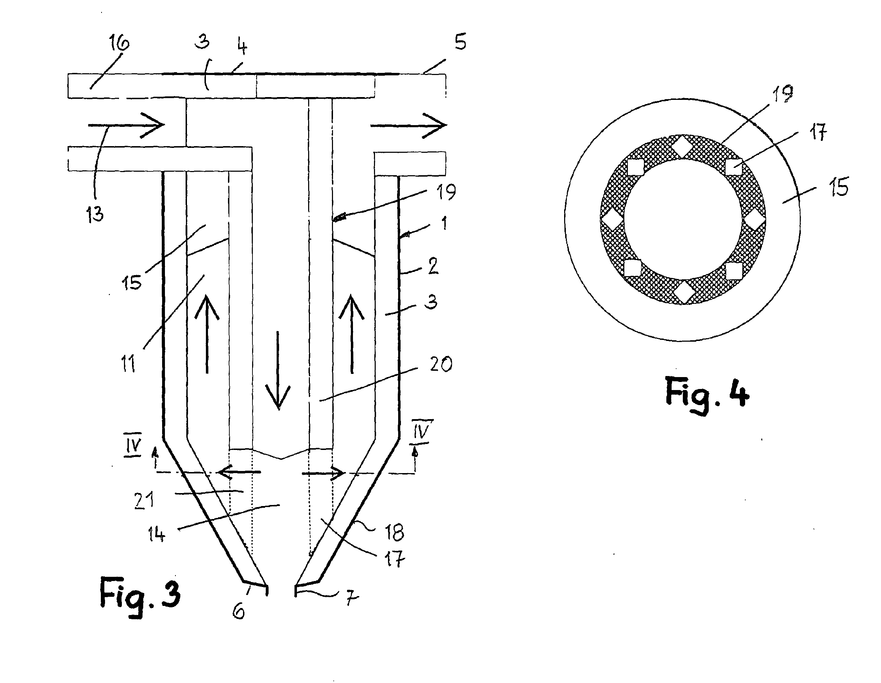

Bei der Ausführungsform nach den Fig. 3 und 4 hat der Behälter 1 die zylindrische Wandung 2, die etwa im unteren Drittel in einen nach unten sich verjüngenden Trichter 18 übergeht. Er ist zentral mit dem Auslass 7 versehen. Innenseitig sind die Wandung 2 und der Trichter 18 mit der Isolierung 3 beschichtet. Im oberen Bereich mündet radial in den Behälter 1 der Einlass 16, über den das Rauchgas 13 zugeführt wird. Der Einlass 16 ist an das obere Ende eines Rohres 19 angeschlossen, das sich zentral im Behälter 1 axial erstreckt und bis zum Trichter 18 verläuft. Im Rohr 19 befindet sich im Bereich der Durchtrittsöffnungen 21 das Schüttgut 14, das durch gezieltes Öffnen und Schließen des Auslasses 7 im Boden 6 des Behälters 1 entnommen wird. Die entnommene Menge fließt über die Durchtrittsöffnungen 21 aus dem Behälterinnenraum 15 nach. Die Wandung 20 des Rohres 19 besteht ebenfalls vorteilhaft aus hitzebeständigem, vorzugsweise keramischem Material. Die Innenwand des Rohres 19 ist ebenso wie die Innenwand des Behälters 1 glatt.

Das Rohr 19 wird vom ringförmigen Innenraum 15 des Behälters 1 umgeben. Im Innenraum 15 befindet sich das Schüttgut 11. Der Innenraum 15 erstreckt sich von der Decke 4 bis etwa in halbe axiale Länge des Trichters 18. Die Decke 4 ist innenseitig ebenfalls mit der Isolierung 3 versehen, die vorteilhaft aus gleichem Material wie die Isolierung an der Innenwand der Behälterwandung 2 und des Trichters 18 besteht. Der Einlass 16 ist entsprechend der vorhergehenden Ausführungsform innenseitig ebenfalls mit der Isolierung versehen.

Das Rauchgas 13 wird am oberen Ende des Behälters 1 über den Einlass 16 radial zugeführt. Es gelangt in das zentrale Rohr 19, in dem es nach unten in Richtung auf das Schüttgut 14 strömt. Es erstreckt sich von der Isolierung 3 bis etwa in Höhe des oberen Endes des Trichters 18. Bei einer vorteilhaften Ausgestaltung ruht das zentrale Rohr 19 auf den Säulen 17, die über den Umfang des Rohres verteilt angeordnet sind. Über diese Säulen 17 ist das Rohr 19 auf der Innenseite des Trichters 18 nahe dem Auslass 7 abgestützt. Die Säulen 17 haben vorteilhaft einen solchen Querschnitt, dass sie einen möglichst geringen Widerstand gegenüber dem vorbeigleitenden Schüttgut 11 bilden. Die dem Schüttgutstrom besonders ausgesetzte Stirnseite ist vorteilhaft aus besonders abriebfestem Material gebildet. In Höhe des Trichterbereiches sind Durchtrittsöffnungen 21 vorgesehen, die sich etwa vom Niveau des oberen Endes des Trichters 18 bis zur Trichterinnenwand vertikal erstrecken und wie bei der vorigen Ausführungsform durch die Bereiche zwischen benachbarten Säulen 17 gebildet werden. Die Durchtrittsöffnungen 21 sind wenigstens so groß, dass das Schüttgut 11 durch die Durchtrittsöffnungen in das Rohr 19 und von dort zum Auslass 7 abströmen können. Das das Rohr 19 von oben nach unten durchströmende Rauchgas 13 tritt durch die Durchtrittsöffnungen 21 radial nach außen in das im Behälterinnenraum 15 befindliche Schüttgut 11. Hier strömt das Rauchgas 13 dann im Behälterinnenraum 15 nach oben und tritt durch den Auslass 5 aus dem Behälter 1 aus. Der Auslass 5 ist am oberen Behälterende vorgesehen und erstreckt sich radial, so dass das Rauchgas 13 in radialer Richtung aus dem Behälter 1 austritt.

Auch bei dieser Ausführungsform durchströmt das Rauchgas 13 das Schüttgut 11 im Wesentlichen in vertikaler Richtung. Innerhalb des Rohres 19 erreicht das Rauchgas 13 das im Rohr befindliche Schüttgut 14 im Bereich der Durchtrittsöffnungen 21 und wird dann im Behälterinnenraum 15 in Höhe des Trichters 18 durch diese Durchtrittsöffnungen 21 radial nach außen umgelenkt. Von dort strömt das Rauchgas in der beschriebenen Weise in vertikaler Richtung durch das Schüttgut 11 nach oben und tritt aus dem Auslass 5 aus.

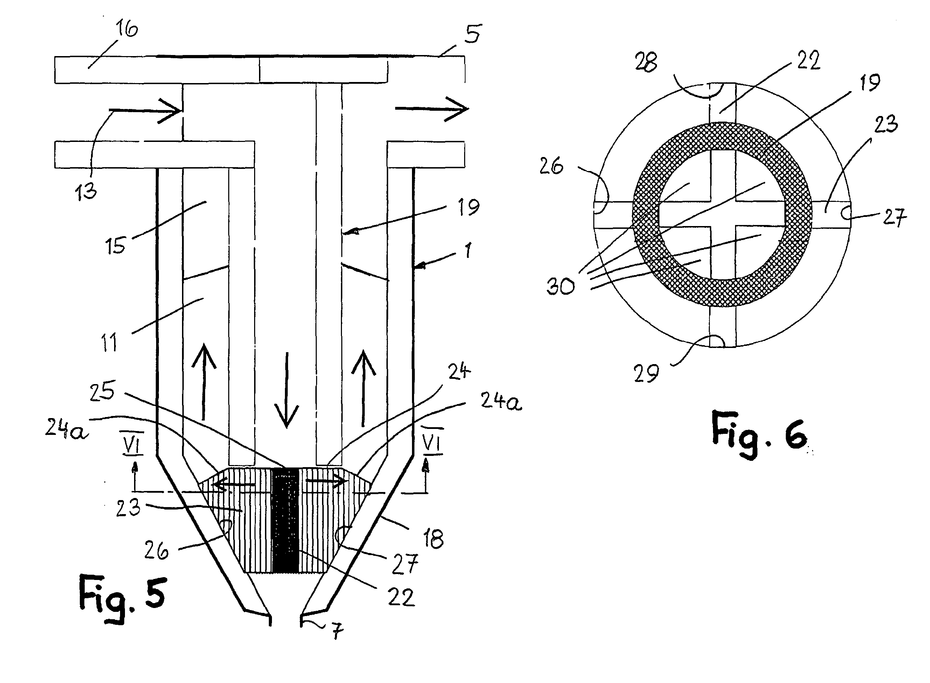

Die Ausführungsform gemäß den Fig. 5 und 6 ist ähnlich ausgebildet wie das Ausführungsbeispiel nach den Fig. 3 und 4. Das zentrale Rohr 19 wird auf zwei senkrecht zueinander liegenden Stützwänden 22, 23 abgestützt, die im Trichter 18 des Behälters 1 angeordnet sind. Die Stützwände 22, 23 erstrecken sich jeweils in Vertikalebenen. Wie Fig. 5 zeigt, haben die Stützwände 22, 23 eine ebene Stirnseite 24, 25, die in Höhe der Außenwandung des Rohres 19 in schräg zur Trichterinnenwand abfallende Stirnseitenabschnitte 24a übergeht. Die beiden Stützwände 22, 23 sind mit ihren einander gegenüberliegenden Außenseiten 26, 27; 28, 29 an der Innenwand 18 befestigt.

Das Schüttgut 11 befindet sich ausschließlich im ringförmigen Behälterinnenraum 15. Innerhalb des Rohres 19 wandert das Schüttgut im Bereich der Stützwände 22, 23 wie bei der vorigen Ausführungsform zur Austrittsöffnung 7.

Das Rauchgas 13 wird am oberen Ende des Behälters 1 über den Einlass 16 radial zugeführt. Das Rauchgas strömt durch das Rohr 19 nach unten und tritt zwischen den Stützwänden 22, 23, auf denen das Rohr 19 mit seinem unteren Ende aufsitzt, radial nach außen in den Behälterinnenraum 15. Hier strömt das Rauchgas 13 durch das Schüttgut 11 im Behälterinnenraum 15 aufwärts und tritt durch den Auslass 5 am oberen Behälterende radial nach außen aus. Das Rohr 19 hat einen solchen Innendurchmesser, dass für das in ihm nach unten strömende Rauchgas 13 ein ausreichender Freiraum 30 zwischen der Innenwand des Rohres 19 und den Stützwänden 22, 23, in Achsrichtung des Rohres 19 gesehen, für den Durchtritt des Rauchgases zur Verfügung steht (Fig. 6).

Das Schüttgut 11 wird durch gezieltes Öffnen des Auslasses 7 in der beschriebenen Weise aus dem Behälter 1 abgezogen und durch von oben einzufüllendes neues Schüttgut ersetzt.

Bei den Ausführungsformen gemäß den Fig. 3 bis 6 strömt das Rauchgas 13 aufwärts durch das Schüttgut 11, das über den Auslass 7 gezielt aus dem Behälter 1 entfernt wird. Dadurch werden auch partikelförmige Verunreinigungen im Rauchgas, die sich im Schüttgut absetzen können, zusammen mit dem Schüttgut aus dem Behälter 1 ausgetragen.

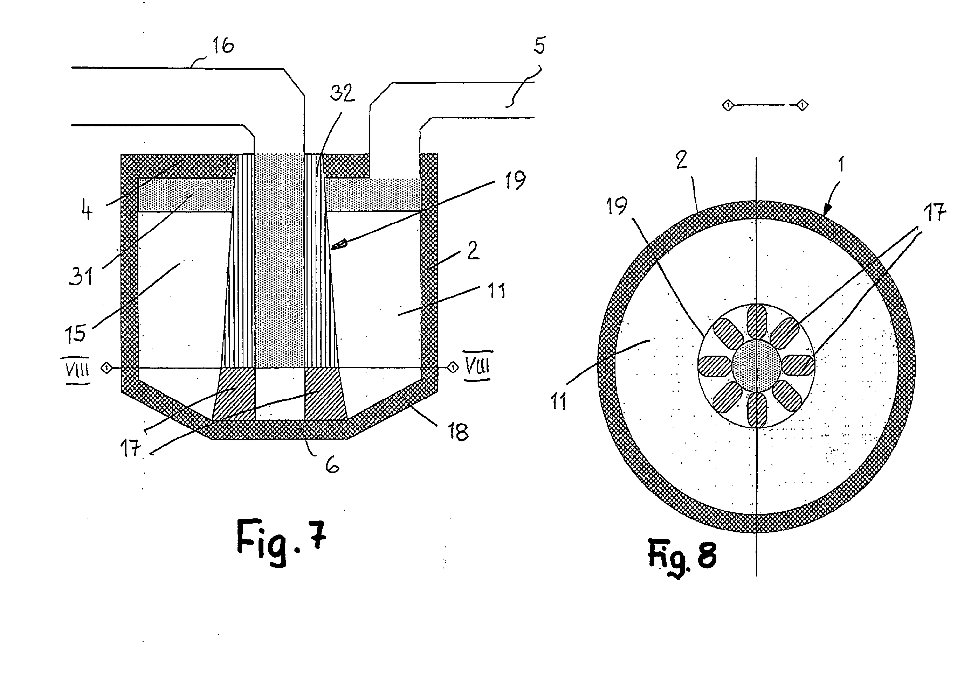

Die Fig. 7 und 8 zeigen einen Behälter 1 mit der zylindrischen Wandung 2, die am unteren Ende an den Trichter 18 anschließt, der sich nach unten verjüngt und die zylindrische Wand 2 mit dem ebenen und senkrecht zur Achse des Behälters 1 liegenden Boden 6 verbindet. In den Behälter 1 mündet zentral das Rohr 19, das durch die Decke 4 des Behälters nach außen geführt ist. Das untere Ende des Rohres 19 sitzt auf den Säulen 17, die sich auf dem Boden 6 abstützen und sich im Querschnitt in Richtung auf den Boden 6 verbreitern. Wie Fig. 8 zeigt, sind die Säulen 17 über den Umfang des Rohres 19 gleichmäßig verteilt angeordnet. Sie haben im Radialschnitt Rechteckform mit abgerundeten Schmalseiten. Dadurch ergibt sich eine strömungstechnisch optimale Querschnittsgestaltung der Säulen 17, so dass das über das Rohr 19 von oben nach unten zugeführte Rauchgas zwischen den Säulen 17 in den Behälterinnenraum 15 strömen kann. Der ringförmige, das Rohr 19 umgebende Behälterinnenraum 15 ist mit dem Schüttgut 11, vorzugsweise den Kugeln, über den größten Teil seiner Höhe gefüllt. Im Bereich der Säulen 17 gelangt das Schüttgut 11 auch in den Querschnittsbereich des Rohres 17. Zwischen dem Schüttgut 11 und der Decke 4 befindet sich ein Freiraum 31, in den der an die Decke 4 angeschlossene Auslass 5 mündet, durch den das durch das Schüttgut 11 durchgeströmte Rauchgas aus dem Behälter 1 austritt.

Das Rohr 19 hat die Wandung 32, deren Wanddicke sich von der Decke 4 aus stetig nach unten bis zum Rohrende verbreitert. Dadurch verringert sich der Querschnitt des Behälterinnenraumes 50 nach unten ebenfalls stetig. Die Innenseite der Isolierung 32 ist zylindrisch und glatt.

Das Rauchgas strömt über den radialen Rohreinlass 16 in das Rohr 19, in dem es vertikal nach unten strömt. Das Rauchgas gelangt in den zwischen den Säulen 17 befindlichen Teil des Schüttgutes 11 beim Austritt aus dem Rohr 19 und strömt radial zwischen den Säulen 17 nach außen in den Behälterinnenraum 15. Hier strömt das Rauchgas durch das Schüttgut 11 axial und vertikal aufwärts, gelangt in den Freiraum 31 und von dort in den Auslass 5.

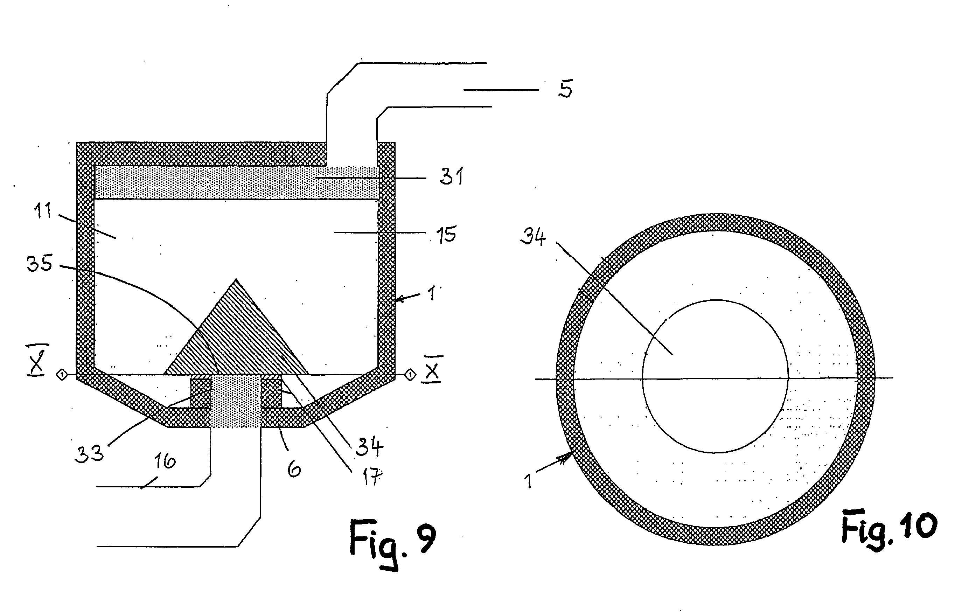

Beim Ausführungsbeispiel nach den Fig. 9 und 10 wird das Rauchgas über den Boden 6 des Behälters 1 zugeführt. Der Einlass 16 schließt an eine zentrisch im Boden 6 befindliche Eintrittsöffnung 33 an. Auf der Innenseite des Bodens 6 stützt sich über die Stützen 17 eine kegelförmige Abdeckung 34 ab, deren Achse in der Mittelachse des Behälters 1 liegt. Die Abdeckung 34 erweitert sich nach unten in Richtung auf die Stützen 17 und liegt mit ihrer unteren Grundseite 35 auf den Stützen 17 auf. Wie Fig. 9 zeigt, überragt die Abdeckung 34 die Stützen 17 radial. Die Stützen 17 sind im Querschnitt strömungstechnisch so gestaltet, dass das von unten über den Einlass 16 zugeführte Rauchgas zwischen den Stützen 17 radial nach außen hindurchtreten kann. Es gelangt in das durch die Kugeln 11 gebildete Schüttgut, das sich im Behälterinnenraum 15 befindet. Das Rauchgas strömt durch das Schüttgut 11 vertikal nach oben bis in den Freiraum 31, in den der deckelseitige Auslass 15 mündet. Durch ihn tritt das Rauchgas aus dem Behälter 1 aus.

Die beschriebenen Behälter 1 sind kostengünstig herzustellende und zu montierende Einrichtungen, die zudem aufgrund ihres einfachen Aufbaues problemlos im Betrieb sind. Das Rauchgas durchströmt den Behälter in vertikaler Richtung entweder von oben nach unten oder von unten nach oben. Je nach Gestaltung des Behälters ist es in der beschriebenen Weise möglich, das Rauchgas innerhalb des Behälters 1 so umzulenken, dass es sowohl vertikal nach unten als auch vertikal nach oben durch den Behälter 1 und das darin befindliche Schüttgut 11, 14 strömt.

## Patentansprüche

1. Rauchgaswärmeübertrager mit wenigstens einem Behälter (1), in dem sich ein von einem Rauchgas (13) durchströmter Wärmeübertrager in Form von Schüttgut (11, 14) befindet und der wenigstens einen Einlass (16) und wenigstens einen Auslass (5) für das Rauchgas (13) aufweist, **dadurch gekennzeichnet, dass** das Rauchgas (13) zumindest annähernd vertikal dem Schüttgut (11, 14) zuführbar ist.

2. Rauchgaswärmeübertrager nach Anspruch 1,
**dadurch gekennzeichnet, dass** das Rauchgas (13) von oben in das Schüttgut (11, 14) einführbar ist.

3. Rauchgaswärmeübertrager nach Anspruch 1,
**dadurch gekennzeichnet, dass** das Rauchgas (13) von unten in das Schüttgut (11, 14) einführbar ist.

4. Rauchgaswärmeübertrager nach einem der Ansprüche 1 bis 3,
**dadurch gekennzeichnet, dass** für das Rauchgas (13) nahe der Behälterinnenwand wenigstens eine Zuführung vorgesehen ist, die vorteilhaft Teil eines ringförmigen Aufnahmeraumes (10) für das Schüttgut (11, 14) ist.

5. Rauchgaswärmeübertrager nach Anspruch 4,
**dadurch gekennzeichnet, dass** in den Aufnahmeraum (10) der Einlass (16) radial oder tangential mündet.

6. Rauchgaswärmeübertrager nach Anspruch 4 oder 5,
**dadurch gekennzeichnet, dass** sich der Aufnahmeraum (10) über einen Teil seiner Höhe in Strömungsrichtung des Rauchgases (13) im Querschnitt erweitert.

7. Rauchgaswärmeübertrager nach einem der Ansprüche 4 bis 6,
**dadurch gekennzeichnet, dass** der ringförmige Aufnahmeraum (10) über wenigstens einen Durchlass (12) mit einem zentralen Innenraum (15) des Behälters (1) strömungsverbunden ist, und dass der Durchlass (12) vorteilhaft am unteren Endbereich des Innenraumes (15) und vorzugsweise zwischen Stützen (17) vorgesehen ist, die auf dem Boden (6) des Behälters (1) abgestützt sind.

8. Rauchgaswärmeübertrager nach Anspruch 7,
**dadurch gekennzeichnet, dass** auf den Stützen (17) ein Trichterteil (8) abgestützt ist, der den ringförmigen Aufnahmeraum (10) über einen Teil seiner Höhe radial nach innen begrenzt.

9. Rauchgaswärmeübertrager nach einem der Ansprüche 4 bis 8,
**dadurch gekennzeichnet, dass** der ringförmige Aufnahmeraum (10) radial nach außen durch die Wandung (2) des Behälters (1) begrenzt ist, dessen Innenraum (15) vorteilhaft mit dem Schüttgut (14) teilweise gefüllt ist.

10. Rauchgaswärmeübertrager nach Anspruch 9,
**dadurch gekennzeichnet, dass** das Schüttgut (14) im Innenraum (15) vom Rauchgas (13) vertikal nach oben durchströmt wird.

11. Rauchgaswärmeübertrager nach einem der Ansprüche 1 bis 10,
**dadurch gekennzeichnet, dass** der Einlass (16) mit wenigstens einem vorteilhaft zentral im Behälterinnenraum (15) verlaufenden Rohr (19) strömungsverbunden ist, das sich durch den Innenraum (15) des Behälters (1) erstreckt und vorteilhaft auf den Stützen (17, 22, 23) abgestützt ist.

12. Rauchgaswärmeübertrager nach Anspruch 11,
**dadurch gekennzeichnet, dass** der Einlass (16) an das obere Ende des Rohres (19) anschließt.

13. Rauchgaswärmeübertrager nach einem der Ansprüche 10 bis 12,
**dadurch gekennzeichnet, dass** der Innenraum des Rohres (19) mit dem das Rohr umgebenden Innenraum (15) des Behälters (1) strömungsverbunden ist.

14. Rauchgaswärmeübertrager nach einem der Ansprüche 1 bis 13,
**dadurch gekennzeichnet, dass** der Einlass (16) in den Boden (6) des Behälters (1) mündet, und dass vorteilhaft oberhalb der Einlassmündung eine Abdeckung (34) im Behälter (1) angeordnet ist.

15. Rauchgaswärmeübertrager nach Anspruch 14,
**dadurch gekennzeichnet, dass** zumindest die der Einlassmündung zugewandte Seite (35) der vorteilhaft auf den Stützen (17) gelagerten Abdeckung (34) größeren Querschnitt hat als die Einlassmündung.
